# EUROPÄISCHE PATENTSCHRIFT

(11) **EP 3 224 073 B1**
(45) Veröffentlichungstag und Bekanntmachung des Hinweises auf die Patenterteilung: **03.06.2020**
(21) Anmeldenummer: 15798421.2
(22) Anmeldetag: 23.11.2015
(51) Int. Cl.: B60J 7/00

(54) **FAHRZEUGDACH**
VEHICLE ROOF
TOIT DE VÉHICULE

(30) Priorität: 24.11.2014 DE 102014117136
(43) Veröffentlichungstag der Anmeldung: 04.10.2017
(73) Patentinhaber: Webasto SE, 82131 Stockdorf (DE)
(72) Erfinder: NAZARENUS, Eugen, 82131 Stockdorf (DE)
(74) Vertreter: Epping - Hermann - Fischer
(86) Internationale Anmeldenummer: PCT/EP2015/077361
(87) Internationale Veröffentlichungsnummer: WO 2016/083300

(56) Entgegenhaltungen:
- EP-A1- 2 377 705
- WO-A1-2014/045338
- DE-A1- 10 203 848
- DE-C1- 3 824 942
- DE-U1-202012 102 650

## Beschreibung

Die Erfindung betrifft ein Fahrzeugdach, insbesondere ein Fahrzeugdach mit einem beweglichen Deckel.

Bei einem Fahrzeug mit einem Fahrzeugdach, das einen beweglichen Deckel aufweist, beispielsweise ein Fahrzeug mit einem Schiebe-Hebedach, kann an der Hinterkante des Deckels eine Wasserrinne vorgesehen sein. Diese fängt bei geöffnetem Deckel beispielsweise Tropfwasser und/oder Schwallwasser vom Deckel auf. Somit wird vermieden, dass das Tropfwasser und/oder das Schwallwasser in einen Trockenbereich des Fahrzeugs gelangt.

DE 10203848 A1 zeigt eine Wasserrinne, auf deren Rückwand eine Dichtung mir einer Dichtlippe aufgesteckt ist.

Es ist wünschenswert, ein Fahrzeugdach anzugeben, das einen geringen Bauraumbedarf hat.

Gemäß einer Ausführungsform der Erfindung weist ein Fahrzeugdach einen Dachrahmen auf. Das Fahrzeugdach weist einen relativ zu dem Dachrahmen beweglichen Deckel auf. Das Fahrzeugdach weist eine relativ zu dem Dachrahmen verschwenkbare Wasserrinne auf. Die Wasserrinne weist eine Wasserführung auf. Die Wasserführung wird von einem Boden, einer ersten und einer zweiten Seitenwand begrenzt. An der zweiten Seitenwand ist ein vorspringendes Wasserleitelement angeordnet, um Wasser abzuleiten, das aus der Wasserführung über die zweite Seitenwand gelangt.

Die Wasserrinne kann aufgrund des vorspringenden Wasserleitelements mit einem geringeren Bauraumbedarf in z-Richtung ausgeführt werden. Die z-Richtung entspricht insbesondere im Normalbetrieb des Kraftfahrzeugs einer vertikalen Richtung von unten nach oben. Die zweite Seitenwand ist insbesondere die Seitenwand, die im Betrieb des Fahrzeugs der Heckscheibe zugewandt ist. Mittels des vorspringenden Wasserleitelements ist zusätzlich zur Wasserführung ein weiterer Wasserkanal ausgebildet, in dem das Wasser insbesondere mittels des Kapillareffekts abgeleitet wird. Somit wird vermieden, dass das Wasser, das nicht vollständig von der Wasserführung aufgefangen wird, in einen Trockenbereich des Fahrzeugdachs gelangt.

Insbesondere reicht die zweite Seitenwand, ausgehend von dem Boden, in einer abgesenkten Position des Deckels maximal bis zu einer durch eine Oberseite des Deckels definierte Ebene. Somit ist es möglich, Bauraum einzusparen. Die Seitenwand wird im Vergleich zu herkömmlichen Wasserrinnen, bei denen die Seitenwand über die durch die Oberseite des Deckels definierte Ebene reicht, in z-Richtung kürzer ausgebildet. Das vorspringende Wasserleitelement ermöglicht trotz der Seitenwand, die maximal bis zu der durch die Oberseite des Deckels definierten Ebene reicht, ein sicheres Auffangen von Tropfwasser vom Fahrzeugdach und/oder Schwallwasser vom Deckel.

An der zweiten Seitenwand ist ein Übergangsbereich angeordnet, der schräg zu der zweiten Seitenwand verläuft. An dem Übergangsbereich ist ein Kanalbereich angeordnet, der schräg zum Übergangsbereich verläuft. Das Wasserleitelement ist an einem dem Übergangsbereich abgewandten Ende des Kanalbereichs angeordnet. Ausgehend von der zweiten Seitenwand erstrecken sich der Übergangsbereich und der Kanalbereich somit in der abgesenkten Position des Deckels in der x-Richtung, die quer zur z-Richtung verläuft. Die x-Richtung verläuft im normalen Betrieb des Fahrzeugs horizontal von der Frontscheibe des Fahrzeugs zur Heckscheibe des Fahrzeugs. Das vorspringende Wasserleitelement ist somit horizontal versetzt zur zweiten Seitenwand angeordnet. Somit ist es möglich, den Baumraumbedarf in z-Richtung zu verringern. Zudem ist so ein verlässliches Auffangen von Wasser möglich, das aus Richtung der Wasserführung über die zweite Seitenwand in Richtung des Wasserleitelements gelangt.

Das Wasserleitelement reicht maximal bis zu einer durch den Übergangsbereich definierten Ebene. Dadurch wird der geringe Bauraumbedarf realisiert. Es ist möglich, die zweite Seitenwand in Abhängigkeit von Bauraumvorgaben mit einer maximalen Höhe zu realisieren und aufgrund des abgeknickten Übergangsbereichs und des abgeknickten Kanalbereichs das Wasserleitelement vorzusehen. In z-Richtung wird durch das Wasserleitelement kein zusätzlicher Bauraum notwendig.

Gemäß Ausführungsformen weist die Wasserrinne entlang der Wasserführung eine Wölbung auf. Dadurch ist ein verlässliches Ableiten des Wassers in der Wasserführung und in dem Wasserkanal am Wasserleitelement in Richtung des Dachrahmens möglich.

Gemäß weiteren Ausführungsformen weist die Wasserrinne zwei Schwenkarme auf, die jeweils mit der Wasserführung gekoppelt sind und mit dem Dachrahmen gekoppelt sind. Die Wasserrinne ist um die Kopplung der Schwenkarme mit dem Dachrahmen verschwenkbar. Somit ist eine in etwa U-förmige Wasserführung realisiert, die ein verlässliches Ableiten des Tropfwassers und/oder des Schwallwassers ermöglicht.

Gemäß weiteren Ausführungsformen springt das Wasserleitelement in eine Richtung quer zum Boden vor. Die Richtung entspricht in der abgesenkten Position des Deckels in etwa der z-Richtung. Gemäß weiteren Ausführungsformen ist ein Winkel zur z-Richtung von bis zu +/- 45° möglich.

Weitere Vorteile, Merkmale und Weiterbildungen ergeben sich aus den nachfolgenden, in Verbindung mit den Figuren erläuterten Beispielen. Gleiche, gleichartige und gleich wirkende Elemente können dabei mit den gleichen Bezugszeichen versehen sein.

Es zeigen:
- Figur 1: eine schematische Darstellung eines Fahrzeugdachs gemäß Ausführungsformen,
- Figur 2: eine schematische Darstellung eines Ausschnitts des Fahrzeugdachs gemäß Ausführungsformen,
- Figur 3: eine schematische Darstellung einer Wasserrinne gemäß Ausführungsformen,
- Figur 4: eine schematische Detailansicht der Wasserrinne gemäß Ausführungsformen,
- Figuren 5A und 5B: schematische Schnittdarstellungen des Fahrzeugdachs gemäß Ausführungsformen, und
- Figuren 6A und 6B: schematische Detailansichten des Fahrzeugdachs gemäß Ausführungsformen.

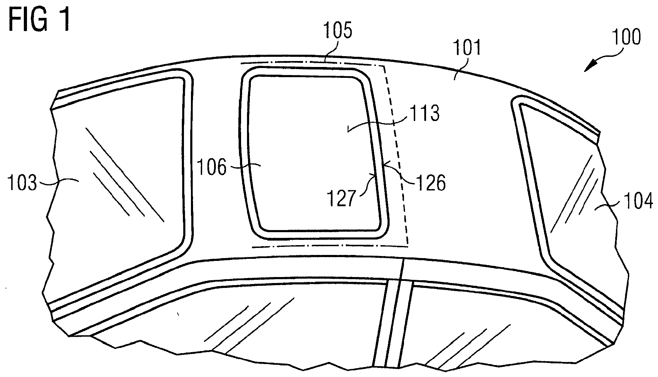

Figur 1 zeigt ein Fahrzeugdach 101 eines Kraftfahrzeugs 100. Das Kraftfahrzeug 100 weist eine Frontscheibe 103 und eine Heckscheibe 104 auf. Das Fahrzeugdach 101 weist einen Dachrahmen 105 auf, der beispielsweise Führungsschienen aufweist. Mit dem Dachrahmen 105 ist ein Deckel 106 gekoppelt. Der Deckel 106 ist beispielsweise mittels Ausstellmechaniken mit dem Dachrahmen 105 gekoppelt. Der Deckel 106 ist relativ zu dem Dachrahmen 105 beweglich, sodass eine Dachöffnung in dem Fahrzeugdach 101 mittels des Deckels 106 verschlossen werden kann oder zumindest teilweise freigegeben werden kann. Beispielsweise ist der Deckel 106 Teil eines sogenannten Schiebe-Hebedachs. Der Deckel 106 weist eine vom Fahrzeuginneren abgewandte Oberseite 113 auf. Der Deckel 106 weist zudem eine Hinterkante 107 auf, die der Heckscheibe 104 zugewandt ist. Der feste Teil des Fahrzeugdachs 101, der die Dachöffnung umgibt, weist eine Dachkante 126 auf. Die Dachkante 126 korrespondiert mit der Hinterkante 127. In geschlossener Position des Deckels 106 ist die Dachkante 126 der Hinterkante 127 des Deckels 106 zugewandt.

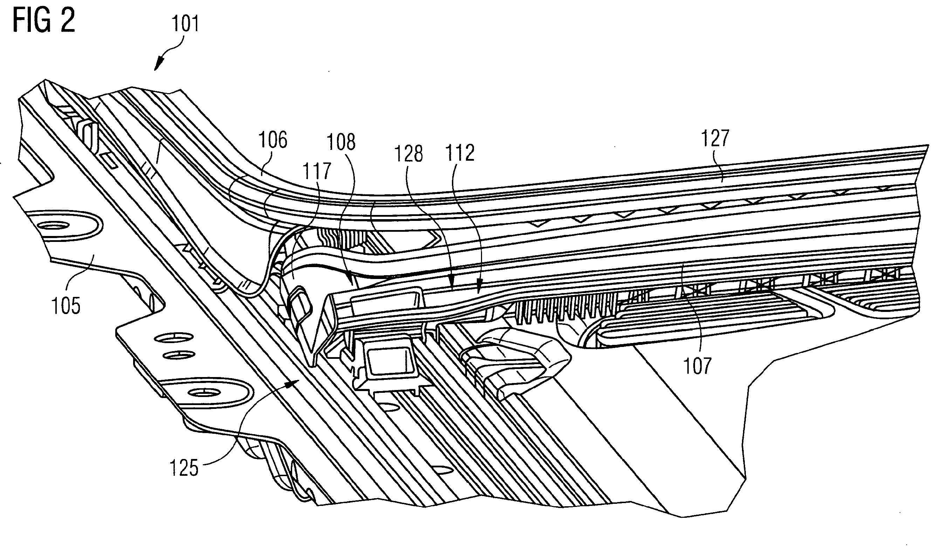

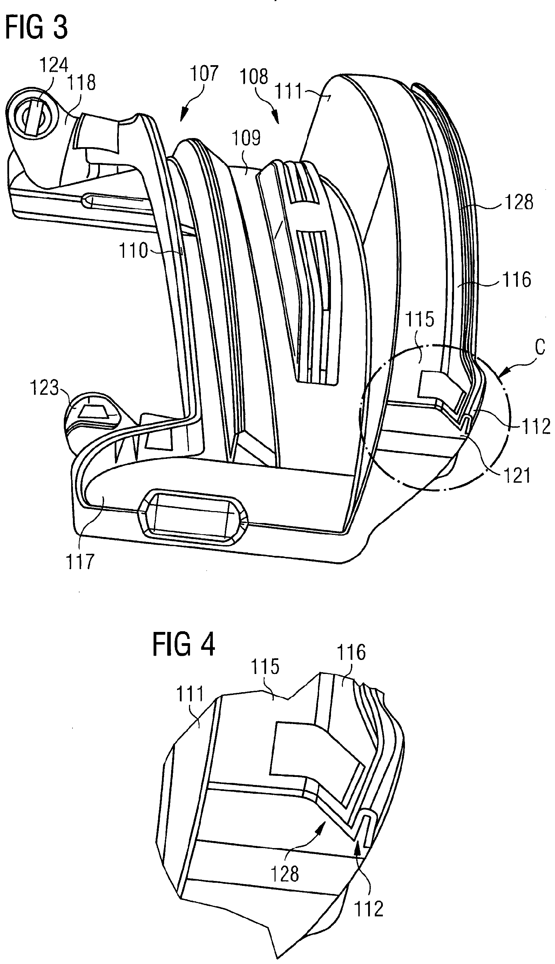

Figur 2 zeigt eine schematische Detailansicht des Fahrzeugdachs 101. Das Fahrzeugdach 101 weist die Wasserrinne 107 auf. Die Wasserrinne 107 ist an der Hinterkante 127 des Deckels 106 angeordnet. Die Wasserrinne 107 ist dazu eingerichtet, bei geöffneten Positionen des Deckels 106 Wasser, aufzufangen das zwischen dem Deckel 106 und der Dachkante 126 hindurch gelangt. Hierzu weist die Wasserrinne 107 eine Wasserführung 108 auf, die sich entlang der Hinterkante 127 des Deckels 106 erstreckt. Seitlich der Wasserführung 108 sind Schwenkarme 117 und 118 (Figur 3) angeordnet, sodass Wasser aus der Wasserführung 108 in einen Wasserablauf 127 des Dachrahmens 105 geführt wird. Zusätzlich zur Wasserführung 108 weist die Wasserrinne 107 einen Wasserkanal 128 auf, um Wasser in den Wasserablauf 125 zu führen. Der Wasserkanal 128 erstreckt sich ebenfalls entlang der Hinterkante 127. Der Wasserkanal 128 wird in Richtung zur Heckscheibe 104 von einem Wasserleitelement 112 begrenzt.

Figur 3 zeigt die Wasserrinne 107 gemäß Ausführungsformen. Die Wasserrinne 107 weist die Wasserführung 108 und die beiden Schwenkarme 117 und 118 auf. Die Schwenkarme 117 und 118 weisen ein jeweiliges Eingriffselement 123 und 124 auf, mittels denen die Wasserrinne 107 mit dem Dachrahmen 105 gekoppelt ist. Die Kopplung erfolgt gemäß Ausführungsformen unmittelbar mit dem Dachrahmen 105. Gemäß weiteren Ausführungsformen ist die Wasserrinne 107 mit der Ausstellmechanik des Deckels 106 gekoppelt, um ein Verschwenken der Wasserrinne 107 relativ zum Dachrahmen 105 zu steuern.

Die Wasserführung 108 wird durch einen Boden 109 nach unten begrenzt. In Richtung der Frontscheibe 103 wird die Wasserführung 108 durch die Seitenwand 110 begrenzt. In Richtung der Heckscheibe 104 wird die Wasserführung 108 durch die Seitenwand 111 begrenzt. Die Seitenwände 110 und 111 verlaufen quer zum Boden 109. Nach oben ist die Wasserführung 108 offen, sodass Wasser in die Wasserführung 108 gelangen kann. An die zweiten Seitenwand 111 schließt sich ein Übergangsbereich 115 an. Der Übergangsbereich erstreckt sich quer zur Seitenwand 111 in Richtung der Heckscheibe 104. An den Übergangsbereich 115 schließt sich ein Kanalbereich 116 an. Der Kanalbereich 116 ist in Bezug auf den Übergangsbereich 115 abgesenkt. An einem dem Übergangsbereich 115 abgewandten Ende 121 des Kanalbereichs 116 ist das Wasserleitelement 112 angeordnet. Dieses erstreckt sich im Wesentlichen gleichgerichtet zur Seitenwand 111. Insbesondere durch den Kanalbereich 116 und das Wasserleitelement 112 ist der Wasserkanal 128 gebildet.

Figur 4 zeigt den Ausschnitt C der Figur 3 der Wasserrinne 107. Der Übergangsbereich 115 erstreckt sich im Wesentlichen quer zur Seitenwand 111. Schräg zum Übergangsbereich 115 und zur Seitenwand 111 verläuft der Kanalbereich 116. Über den Kanalbereich 116 springt das Wasserleitelement 112 vor, sodass der Wasserkanal 128 ausgebildet ist.

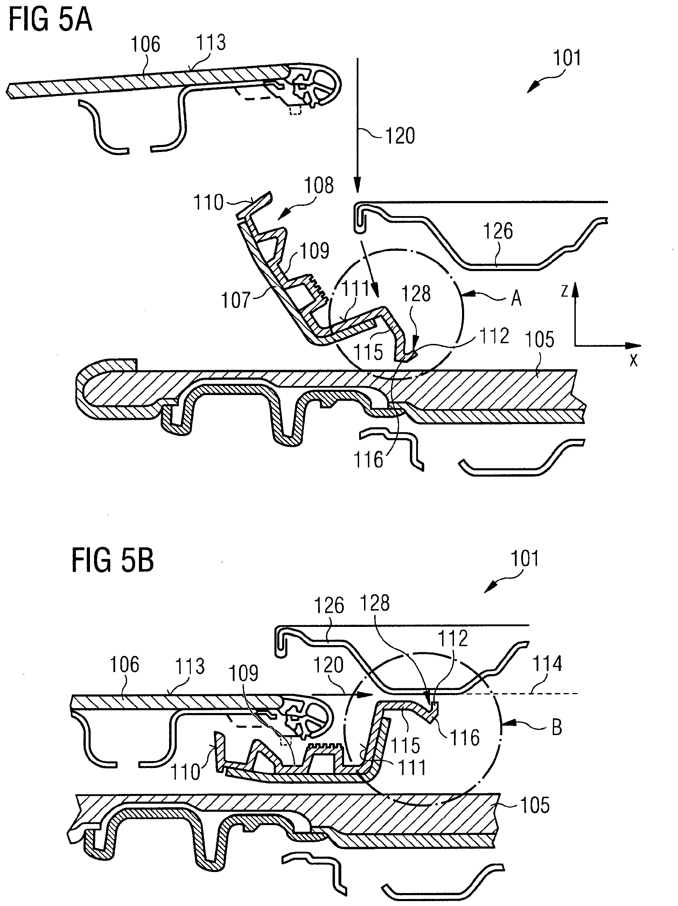

Figuren 5A und 5B zeigen Querschnitte des Fahrzeugdachs 101 bei unterschiedlichen Positionen des Deckels 106. Figur 5A zeigt das Fahrzeugdach 101 in einer Hubstellung des Deckels 106, die auch Lüfterstellung genannt wird. Figur 5B zeigt eine abgesenkte Position des Deckels, die auch geöffnete Position genannt wird.

In der Hubstellung des Deckels 106 ist die Wasserrinne 107 verschwenkt, sodass Wasser 120, das in der Figur durch Pfeile symbolisiert ist, von der Wasserrinne 107 aufgefangen wird. Insbesondere wenn das Fahrzeug geneigt abgestellt ist, kann Wasser zwischen dem Deckel 106 und der Dachkante 126 nach innen gelangen. Das Wasser wird teilweise von der Seitenwand 111 in der Wasserführung 108 aufgefangen. Da die Seitenwand 111 verhältnismäßig kurz ausgebildet ist, um Bauraum zu sparen, kann jedoch auch ein Teil des Wassers über die Seitenwand 111 gelangen. Dieser Teil wird über den Übergangsbereich 115 und den Kanalbereich 116 in den Wasserkanal 128 geführt. Das Wasser wird dann entlang des Wasserleitelements 112 in den seitlichen Wasserablauf 125 geleitet. Insbesondere wird das Wasser mittelt des Wasserleitelements 112 mit Hilfe des Kapillareffekts zu den seitlichen Wasserabläufen 125 geführt. In der Hubstellung des Deckels wird somit durch das Wasserleitelement 112 das überlaufende Abtropfwasser aufgefangen und nach rechts und links in die seitlichen Wasserabläufe 125 in den Führungsschienen des Dachrahmens 105 geleitet.

Figur 5B zeigt den Deckel 106 in der abgesenkten Position. Die Oberseite 113 des Deckels definiert eine Ebene 114. Die Seitenwand 111 reicht vom Boden 109 entlang der z-Richtung bis maximal zu der Ebene 114. Das Wasserleitelement 112 reicht entlang der z-Richtung ebenfalls maximal bis zur Ebene 114. Das Schwallwasser 120, das nach hinten von der Oberseite 113 über den Deckel 106 gelangt, kann zum Teil über die Seitenwand 111 gelangen. Dieser Teil wird mittels des Übergangsbereichs 115 und des Kanalbereichs 116 in den Wasserkanal 128 geführt. Der Teil des Wassers 120, der über die Seitenwand 111 in z-Richtung gelangt, wird von dem Wasserleitelement 112 aufgefangen und insbesondere mittels des Kapillareffekts zu den seitlichen Wasserführungen 125 rechts und links in den Führungsschienen des Dachrahmens 105 geleitet.

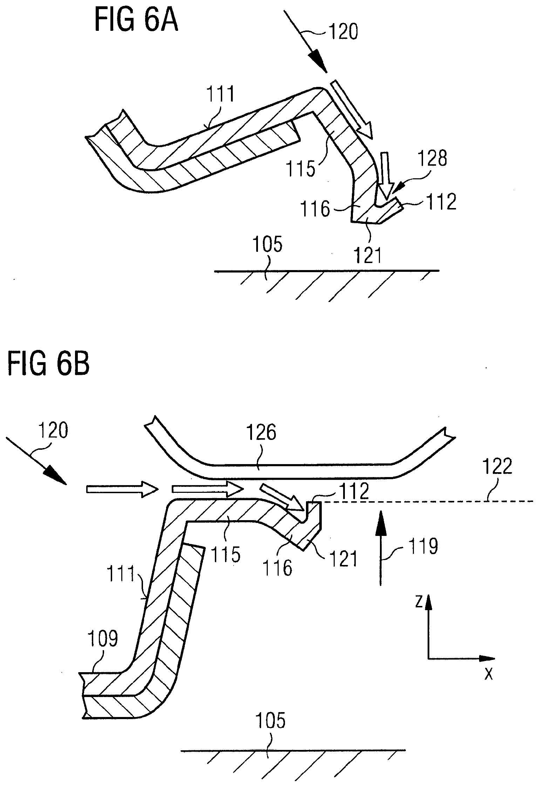

Figur 6A zeigt eine Detailansicht des Ausschnitts A der Figur 5A. In der Hubstellung des Deckels 106 wird das Abtropfwasser von dem Wasserleitelement 112 aufgefangen. Der Übergangsbereich 115, der Kanalbereich 116 und das vorspringende Wasserleitelement 112 sind zueinander so geneigt, dass auch in der verschwenkten Position der Wasserrinne 107 das Wasser in dem Wasserkanal 128 aufgefangen werden kann und zu den Seiten befördert werden kann.

Figur 6B zeigt eine Detailansicht des Ausschnitts B der Figur 5B. Das Wasser 120, das über die Seitenwand 111 in x-Richtung nach hinten gelangt, wird von dem Wasserleitelement 112 aufgefangen. Somit gelangt das Wasser nicht oder nahezu nicht in einen Bereich, der in x-Richtung hinter dem Wasserleitelement 112 liegt. Dieser Bereich ist insbesondere als Trockenbereich definiert. Das Wasserleitelement 112 springt in eine Richtung 119 über den Kanalbereich 116 vor. Die Richtung 119 ist insbesondere der z-Richtung gleichgerichtet. Der Übergangsbereich 115 definiert eine Ebene 122. Das Wasserleitelement 112 reicht entlang der z-Richtung maximal bis zu der Ebene 122.

Die Bauhöhe der hinteren Seitenwand 111 ist im Vergleich zu herkömmlichen Fahrzeugdächern reduziert. Somit ist es möglich, auch in eng vorgegebenen Einbauräumen die Funktionalität der Wasserrinne 107 zu erhalten und Kollisionen mit anderen Bauteilen wie beispielsweise der Dachkante 126 zu vermeiden. Mittels des Wasserleitelements 112 ist auch bei der reduzierten Bauhöhe der Seitenwand 111 ein Eintreten des Wassers 120 über die Seitenwand 111 hinweg in den Fahrzeuginnenraum bzw. in einen vordefinierten Trockenbereich vermeidbar. Das Wasserleitelement 112 wird auch Wasserleitrippe genannt. Der Querschnitt des Wasserleitelements 112 ist insbesondere in Abhängigkeit aus akustischen Gründen in unterschiedlichen Formen möglich. Beispielsweise ist eine Wellenform, eine zackige Form oder weitere Formen möglich. Auch ein unterbrochener Verlauf ist möglich, solange ein sicheres Ableiten in die seitlichen Wasserabläufe 125 gewährleistet ist.

Die Wasserrinne 107 mit dem Wasserleitelement 112 ermöglicht den Einsatz von Wasserrinnen auch in engen Bauräumen ohne Funktionsbeeinträchtigung im Wassermanagement. Zudem ist eine Materialeinsparung möglich. Durch die Materialeinsparung ist eine Kosteneinsparung möglich. Zudem wird die Maßhaltigkeit verbessert, da durch das Wasserleitelement 112 der Wölbungsverlauf der Seitenwand 111 stabiler wird.

## Patentansprüche

1. Fahrzeugdach, aufweisend:
- einen Dachrahmen (105),
- einen relativ zu dem Dachrahmen (105) beweglichen Deckel (106),
- eine relativ zu dem Dachrahmen (105) verschwenkbare Wasserrinne (107), die aufweist:
- eine Wasserführung (108), die von einem Boden (109), einer ersten (110) und einer zweiten (111) Seitenwand begrenzt ist, wobei an der zweiten Seitenwand (111) ein vorspringendes Wasserleitelement (112) angeordnet ist, um Wasser (120) abzuleiten, das aus der Wasserführung (108) über die zweite Seitenwand (111) gelangt, wobei
- an der zweiten Seitenwand (111) ein Übergangsbereich (115) angeordnet ist, der schräg zu der zweiten Seitenwand (111) verläuft, **dadurch gekennzeichnet dass**
- an dem Übergangsbereich (115) ein Kanalbereich (116) angeordnet ist, der schräg zu dem Übergangsbereich (115) verläuft, wobei das Wasserleitelement (112) an einem dem Übergangsbereich (115) abgewandten Ende (121) des Kanalbereichs (116) angeordnet ist, und
- das Wasserleitelement (112) maximal bis zu einer durch den Übergangsbereich (115) definierten Ebene (122) reicht.

2. Fahrzeugdach nach Anspruch 1, bei dem die zweite Seitenwand (110) ausgehend von dem Boden (109) in einer abgesenkten Position des Deckels (106) maximal bis zu einer durch einer Oberseite (113) des Deckels (106) definierten Ebene (114) reicht.

3. Fahrzeugdach nach einem der Ansprüche 1 oder 2, bei dem die Wasserrinne (107) entlang der Wasserführung (108) eine Wölbung aufweist.

4. Fahrzeugdach nach einem der Ansprüche 1 bis 3, bei der die Wasserrinne (107) zwei Schwenkarme (117, 118) aufweist, die jeweils mit der Wasserführung (108) gekoppelt sind und mit dem Dachrahmen (105) gekoppelt sind, wobei die Wasserrinne (107) um die Kopplung der Schwenkarme (117, 118) mit dem Dachrahmen (105) verschwenkbar ist.

5. Fahrzeugdach nach einem der Ansprüche 1 bis 4, bei dem das Wasserleitelement (112) in eine Richtung (119) quer zum Boden vorspringt.

## Claims

1. Vehicle roof, having:
- a roof frame (105),
- a cover (106) which is movable relative to the roof frame (105),
- a gutter (107) which is pivotable relative to the roof frame (105) and which has:
- a water channel (108) which is bounded by a base (109), a first side wall (110) and second side wall (111), wherein a projecting water-conducting element (112) is arranged on the second side wall (111) in order to conduct away water (120) which passes out of the water channel (108) over the second side wall (111), wherein
- a transition region (115) is arranged on the second side wall (111), said transition region running obliquely with respect to the second side wall (111), **characterized in that**
- a passage region (116) is arranged on the transition region (115), the passage region running obliquely with respect to the transition region (115), wherein the water-conducting element (112) is arranged at an end (121) of the passage region (116) that faces away from the transition region (115), and
- the water-conducting element (112) reaches at maximum as far as a plane (122) defined by the transition region (115).

2. Vehicle roof according to Claim 1, in which the second side wall (110) reaches from the base (109), in a lowered position of the cover (106), at maximum as far as a plane (114) defined by an upper side (113) of the cover (106).

3. Vehicle roof according to either of Claims 1 and 2, in which the gutter (107) along the water channel (108) has a curvature.

4. Vehicle roof according to one of Claims 1 to 3, in which the gutter (107) has two pivot arms (117, 118) which are each coupled to the water channel (108) and to the roof frame (105), wherein the gutter (107) is pivotable about the coupling of the pivot arms (117, 118) to the roof frame (105).

5. Vehicle roof according to one of Claims 1 to 4, in which the water-conducting element (112) projects in a direction (119) transversely with respect to the base.

## Revendications

1. Toit de véhicule, présentant :
- un cadre de toit (105),
- un couvercle (106) déplaçable par rapport au cadre de toit (105),
- une gouttière (107) pouvant pivoter par rapport au cadre de toit (105), qui présente :
- une rigole d'eau (108) qui est limitée par un fond (109), une première (110) et une deuxième (111) paroi latérale, un élément de guidage d'eau en saillie (112) étant disposé au niveau de la deuxième paroi latérale (111) afin d'évacuer l'eau (120) qui parvient hors de la rigole d'eau (108) par-dessus la deuxième paroi latérale (111),
- une région de transition (115) étant disposée au niveau de la deuxième paroi latérale (111), laquelle s'étend obliquement par rapport à la deuxième paroi latérale (111),
**caractérisé en ce que**
- une région de canal (116) est disposée au niveau de la région de transition (115), laquelle s'étend obliquement par rapport à la région de transition (115), l'élément de guidage d'eau (112) étant disposé au niveau d'une extrémité (121) de la région de canal (116) opposée à la région de transition (115), et
- l'élément de guidage d'eau (112) s'étend au maximum jusqu'à un plan (122) défini par la région de transition (115).

2. Toit de véhicule selon la revendication 1, dans lequel la deuxième paroi latérale (110) s'étend à partir du fond (109) dans une position abaissée du couvercle (106) au maximum jusqu'à un plan (114) défini par un côté supérieur (113) du couvercle (106) .

3. Toit de véhicule selon l'une quelconque des revendications 1 et 2, dans lequel la gouttière (107) présente une courbure le long de la rigole d'eau (108).

4. Toit de véhicule selon l'une quelconque des revendications 1 à 3, dans lequel la gouttière (107) présente deux bras pivotants (117, 118) qui sont chacun accouplés à la rigole d'eau (108) et qui sont accouplés au cadre de toit (105), la gouttière (107) pouvant pivoter autour de l'accouplement des bras pivotants (117, 118) au cadre de toit (105).

5. Toit de véhicule selon l'une quelconque des revendications 1 à 4, dans lequel l'élément de guidage d'eau (112) fait saillie dans une direction (119) transversalement au fond.
